(19) Europäisches Patentamt
European Patent Office
Office européen des brevets

(11) EP 1 669 431 B1

(12) **EUROPEAN PATENT SPECIFICATION**

(45) Date of publication and mention of the grant of the patent:
**07.05.2008 Bulletin 2008/19**

(51) Int Cl.:
***C09K 19/60*** *(2006.01)* ***C09K 19/38*** *(2006.01)*
***C09K 19/20*** *(2006.01)*

(21) Application number: **05024362.5**

(22) Date of filing: **09.11.2005**

(54) **Polymerizable liquid crystal formulation and polarizer**

Polymerisierbare Flüssigkristallzusammensetzungen und Polarisator

Compositions liquides cristallines polymérisables et polariseur

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.12.2004 EP 04028925**

(43) Date of publication of application:
**14.06.2006 Bulletin 2006/24**

(73) Proprietor: **Merck Patent GmbH**
**64293 Darmstadt (DE)**

(72) Inventors:
- **Hammond-Smith, Robert, Dr.**
**Fordinbridge SP6 3HA (GB)**
- **Riddle, Rodney, Dr.**
**Parkstone, Poole,**
**Dorset BH12 3AG (GB)**
- **Kuntz, Matthias, Dr.**
**64342 Seeheim-Jugenheim (DE)**
- **Francis, Matthew**
**Walton BA16 9RX (GB)**

(56) References cited:
**EP-A- 0 397 263**
**EP-A- 1 256 602**
**EP-A- 1 462 485**
**EP-B- 1 226 459**
**GB-A- 2 357 291**
**US-A- 5 672 296**
**US-A- 5 707 566**
**US-A- 6 007 745**
**US-B1- 6 686 980**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 669 431 B1

Printed by Jouve, 75001 PARIS (FR)

## Description

### Field of Invention

The invention relates to a polymerizable liquid crystal or mesogenic formulation, to polarizers obtained from this formulation, and to their use in optical devices and security markings.

### Background and Prior Art

Polarizer films are known in prior art. Usually they are manufactured from stretched polymer films incorporating a light absorbing material such as iodine or a dichroic dye. The stretching of the film creates an anisotropy which affects the absorbance of light differently in two orthogonal directions. The use of dichroic dyes to create linear polarizers has been described for example in EP-A-1 226 459.

The performance of the polarizing films is quantified by the polarizing efficiency. Usually the aim is to prepare films with a high as possible polarizing efficiency. Therefore, it has been proposed in prior art to achieve a higher degree of anisotropy by using liquid crystal (LC) polymer films with uniform orientation comprising a dichroic dye, like for example in US 5,707,566 or US 5,672,296. EP-A-0 397 263 discloses a polarizer film obtained from a mixture of a crosslinkable LC monomer and a dichroic dye which is coated on a substrate, oriented and photopolymerized. US 6,007,745 discloses a linear UV polarizer obtained from an LC mixture comprising one or more polymerizable mesogenic compounds and a dichroic UV dye.

To achieve uniform orientation of the LC material usually additional means are required, like e.g. surface treatment, high temperatures or application of an electric or magnetic field. For example, US 5,707,566 and US 5,672,296 describe the processing of thermotropic LC polymers at a temperature above 170°C. EP-A-0 397 263 suggests to align the crosslinkable LC material by rubbing the substrate or applying heat, alignment layers or strong magnetic or electric fields. US 6,007,745 suggests the use of rubbed polyimide alignment layers, heating and/or shearing the coated material between two substrates.

GB 2 357 291 A discloses a process of preparing a reflective film comprising a layer of a polymerized mesogenic material with helically twisted structure, wherein the helix axis is perpendicular to the film plane, and containing regions with varying helical pitch, to a polymerizable mesogenic material suitable for said process, to a reflective film obtainable by said process, to the use of such a reflective film as reflective broadband or notch polarizer or as a multicoloured film or image in liquid crystal displays, a colour filter, in effect pigments, for decorative or security applications and to a liquid crystal display comprising a liquid crystal cell and such a reflective polarizer.

In EP 1 256 602 A1, a mesogenic crosslinkable mixture comprising at least one polymerisable liquid crystal and at least one polymerisable dichroic dye of a particular formula, a liquid crystalline polymer film formed from such a mixture, a process for the preparation of the liquid crystalline polymer film as well as the use of said mixtures is disclosed.

From US 6,686,980 B1 a method for producing an anisotropic film is known, which comprises forming a copolymer of a monomer containing a dichroic dye having a carbon-carbon unsaturated bond with a different monomer having a carbon-carbon unsaturated bond to obtain a film, wherein the dichroic dye having a carbon-carbon unsaturated bond is oriented in the film, wherein the film is formed by coating, on a substrate having been subjected to orientation, a solution containing the monomer containing a dichroic dye having a carbon-carbon unsaturated bond, the different monomer having a carbon-carbon unsaturated bond and a polymerization initiator, orienting the dichroic dye contained in the solution, and performing a copolymerization reaction in the oriented state.

EP 1 462 485 A1 discloses polymerizable dichroic azo dyes comprising azo-chromophores having at least one standard mesogenic ring system attached to said chromophores and at least one polymerizable group leading to dyes having sufficient solubility and a very high order parameter, to the use of such a dye for the preparation of mesogenic polymerizable mixtures and to the use of such mixtures for the preparation of dichroic liquid crystalline polymer films.

It is desired to have available materials and methods that allow easy and time- and cost-effective preparation of linear polarizers based on polymerized LC materials. It was an aim of the present invention to provide such materials and methods. This aim can be achieved by materials and methods as claimed in the present invention.

### Definition of Terms

The term 'film' includes rigid or flexible, self-supporting or freestanding films with mechanical stability, as well as coatings or layers on a supporting substrate or between two substrates.

The term 'liquid crystal or mesogenic material' or 'liquid crystal or mesogenic compound' means materials or compounds comprising one or more rod-shaped, board-shaped or disk-shaped mesogenic groups, i.e. groups with the ability to induce liquid crystal (LC) phase behaviour. LC compounds with rod-shaped or board-shaped groups are also known in the art as 'calamitic' liquid crystals. LC compounds with a disk-shaped group are also known in the art as

'discotic' liquid crystals. The compounds or materials comprising mesogenic groups do not necessarily have to exhibit an LC phase themselves. It is also possible that they show LC phase behaviour only in mixtures with other compounds, or when the mesogenic compounds or materials, or the mixtures thereof, are polymerized.

For the sake of simplicity, the term 'liquid crystal material' is used hereinafter for both mesogenic and LC materials.

Compounds with one polymerizable group are also referred to as 'monoreactive' compounds, compounds with two polymerizable groups as 'direactive' compounds, and compounds with more than two polymerizable groups as 'multireactive' compounds. Compounds without a polymerizable group are also referred to as 'non-reactive' compounds.

The term 'reactive mesogen' (RM) means a polymerizable mesogenic or liquid crystal compound.

The term 'director' is known in prior art and means the preferred orientation direction of the long molecular axes (in case of calamitic compounds) or short molecular axis (in case of discotic compounds) of the mesogenic groups in an LC material.

The term 'planar structure' or 'planar orientation' refers to a film wherein the LC director is substantially parallel to the film plane.

Unless stated otherwise, the term "polarization direction" of a linear polarizer according to the present invention means the direction of the plane of linear polarised light transmitted by the polarizer, which is identical with its "transmission axis". In case of a polarizer comprising a dichroic dye this is usually perpendicular to the absorption direction of the dye.

## Summary of the Invention

The invention relates to a process for the preparation of a linear polarizer comprising the steps of providing a layer of a polymerizable mesogenic formulation comprising

- one or more polymerizable mesogenic compounds with a nematic and/or smectic LC phase having at least one polymerizable group,
- one or more dichroic dyes having an absorption maximum in the visible wavelength range,
- optionally one or more chain transfer agents,
- optionally one or more polymerization initiators and
- optionally one or more solvents

onto a substrate, evaporating the solvent, whereby after evaporation of the solvent the polymerizable LC material spontaneously adopts planar orientation, polymerizing the material and optionally removing the substrate.

The invention further relates to a polymer film for use as linear polarizer, obtainable by a method as described above and below.

The invention further relates to the use of a polarizer as described above and below as optical component in optical or electrooptical devices, or for decorative or security applications, especially as a means for detection, inspection or verification of a security marking or security feature.

The invention further relates to the use of a polarizer having an absorption in the visible wavelength range, preferably a coloured (i.e. non-black) polarizer, for viewing or making visible a security feature or a security marking.

The invention further relates to a security marking, security feature or security device comprising one or more polarizers as described above and below. The invention further relates to a document of value, transfer foil or hot stamping foil comprising one or more security markings, features or devices as described above and below.

## Brief Description of the Drawings

Figures 1 and 2 show the polarizing efficiency of a polarizer according to example 1 and 2 of the present invention.

## Detailed Description of the Invention

The use of a formulation as described above allows the preparation of a polarizer directly on a substrate, without the need of further alignment means or methods like rubbing, alignment layers or surface-active compounds.

Furthermore, very thin films of a few microns, preferably less than 10 microns, very preferably less than 5 microns, can be prepared. This is an advantage when using the polarizer for example in applications where thin films are required, like a security marking included in a document of value, or an incell component in an optical device like an LC display (i.e. between the substrates forming the cell containing the switchable LC medium).

Polarization efficency can be defined in terms of the light transmitted between two plane-parallel polarizing films that are arranged such that their transmission axes (in the film plane) are parallel to each other (also referred to as "parallel polarizers"), and the light transmitted between two plane-parallel polarizing films that are arranged such that

their transmission axes are at an angle of 90° to each other (also referred to as "crossed polarizers"). The Polarizing Efficiency (PE) is then given as

$$\sqrt{\frac{(T_p - T_c)}{(T_p + T_c)}}\ X\ 100\%$$

wherein $T_p$ is the transmission between parallel polarizers and $T_c$ the transmission between crossed polarizers. Commercially available standard polarizers typically have an efficiency of greater than 95%.

The formulation as described above is especially suitable for preparing polarizers which can be used for identifying a birefringent or LC security marking, e.g. a security marking comprising a nematic LC layer on top of a cholesteric LC layer.

Surprisingly it was found that when using a polarizer according to the present invention for identifying a birefringent or LC security marking, the polarization efficiency does not need to be very high. Thus, a preferred embodiment of the present invention relates to a polarizer film having a polarization efficiency of less than 50%, preferably less than 30% for light of a wavelength from 700 to 400nm. A polarizer with such a low efficiency would not give a discernible effect between crossed and uncrossed states (with a second polarizer) when viewed with the naked eye. However, the efficiency is still sufficient to view or make visible a security feature or security marking based on LC materials. Therefore it is not necessary to prepare a polarizer having a high polarization efficiency, which is an advantage over existing polarizers of prior art. Another advantage is that a simple process can be used to prepare a polarizer film that is suitable for viewing or making visible a security marking.

Another object of the present invention relates to the use of a coloured (i.e. non-black) polarizer, preferably as described above and below, for viewing or making visible a security feature or security marking, especially a security marking comprising LC material.

Another object of the invention relates to a security marking comprising LC material and at least one coloured polarizer for viewing it or making it visible.

The security marking itself may be invisible or visible to the naked eye without the polarizer. In the first case, when placing the polarizer on the security marking, e.g. an otherwise invisible pattern or colour is revealed which can be used for authenfication. In the second case e.g. a change of an already visible colour or pattern is observed when the polarizer is placed on the security marking or rotated. In this case viewing the security marking through the polarizer provides an additional security feature.

A preferred embodiment of the present invention relates to a circular polarizer comprising a linear polarizer as described above and below and further comprising a birefringent film. Such a circular polarizer is obtainable for example by preparing the linear polarizer from the polymerizable mesogenic formulation on a birefringent substrate, or by laminating the linear polarizer after its preparation to a birefringent film. Such a circular polarizer is particularly useful to identify cholesteric LC security features which reflect circularly polarised light. The circular polarizer can be prepared and used to show different effects depending upon the helical sense of the cholesteric LC in the security feature.

Suitable security markings are for example those comprising films of polymerized or crosslinked LC material, especially cholesteric or nematic LC material, or comprising polymerized or unpolymerized thermochromic LC material, or combinations thereof. These may be combined with additional features like structured surfaces, holograms or hot stamping foils.

Examples of suitable and preferred security markings comprising LC material are known in the art. Examples of security markings comprising nematic LC material are disclosed for example in GB 2357061 A, US 6,641,874, EP 1 335 217 A, EP 1 336 874 A, WO 2004/005425 A1, WO 2004/025337 A1, EP 1 422 283 A or EP 1 431 050 A. Examples of security markings comprising thermochromic or cholesteric LC material are disclosed for example in US 6,117,920, US 6,217,948, US 6,660,345, GB 2355720 A, US 6,667,793, EP 1 201 726 A, EP 1 381 910 A, EP 1 381 520 A, EP 1 281 538 A or EP 1 295 929 A.

Especially preferred is a security marking or security feature comprising one or more nematic LC layers and one or more cholesteric LC layers.

The polarizer is prepared by a process comprising the following steps

A) providing a layer of the polymerizable mesogenic formulation mentioned above on a substrate,

B) evaporating off the solvent,

C) polymerizing the mesogenic material,

D) optionally removing the substrate.

After evaporation of the solvent the polymerizable LC material according to the present invention does spontaneously adopt planar orientation, i.e. with the LC director parallel to the film plane. Thereby the dichroic dye is oriented with its absorption axis (which is usually its long molecular axis) substantially parallel to the orientation direction of the LC director. The orientation of the LC material and the dye is then fixed by polymerization.

As a result, when the polarizer film is irradiated with unpolarized light, the dichroic dye absorbs the polarization component of the light that is parallel to its absorption axis. The light transmitted by the polarizer is thus linearly polarized in a plane perpendicular to the orientation direction of the dye and the polymerized LC material.

The polymerizable LC material is a liquid crystal (LC) material with a nematic and/or smectic LC phase. Preferably it comprises at least one di- or multifunctional polymerizable mesogenic compound and optionally at least one monofunctional polymerizable mesogenic compound.

If di- or multifunctional polymerizable compounds are present, a polymer network is formed. A film made of such a network is self-supporting and shows a high mechanical and thermal stability and a low temperature dependence of its physical and optical properties.

A preferred polymerizable LC formulation comprises

- 2 to 60 %, preferably 3 to 40 % of one or more mesogenic compounds having two or more polymerizable groups,
- 0 to 60 %, preferably 3 to 40 % of one or more mesogenic compounds having one polymerizable group,
- 0.1 to 10 %, preferably 0.2 to 5 % of one or more dichroic dyes,
- 0 to 5 %, preferably 0.1 to 3 % of one or more chain transfer agents,
- 0 to 10 %, preferably 0.1 to 8 % of one or more polymerization initiators, preferably photoinitiators,
- 0 to 90 %, preferably > 0 to 90 %, preferably 35 to 80 % of one or more solvents, preferably organic solvents.

Especially preferred are rod-shaped or board-shaped mesogenic or liquid crystal compounds. Further preferred are the compounds of formula R1-R13 shown below.

Polymerizable mesogenic mono-, di- and multifunctional polymerizable compounds used for the present invention can be prepared by methods which are known per se and which are described, for example, in standard works of organic chemistry such as, for example, Houben-Weyl, Methoden der organischen Chemie, Thieme-Verlag, Stuttgart.

Examples of suitable polymerizable mesogenic compounds that can be used as monomers or comonomers in a polymerizable LC mixture according to the present invention are disclosed for example in WO 93/22397, EP 0 261 712, DE 195 04 224, WO 95/22586, WO 97/00600 and GB 2 351 734. The compounds disclosed in these documents, however, are to be regarded merely as examples that shall not limit the scope of this invention.

Examples of especially useful polymerizable mesogenic compounds are the following

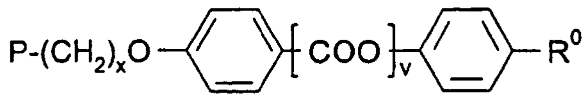

(R1)

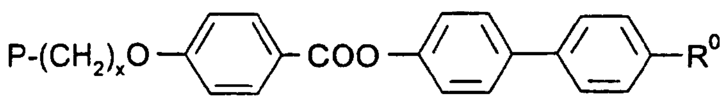

(R2)

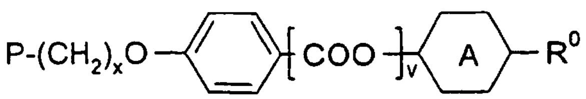

(R3)

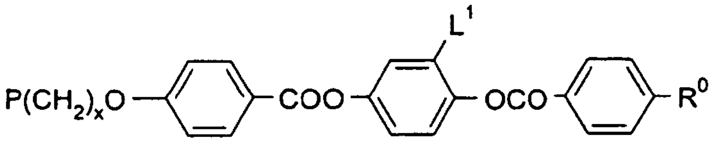

(R4)

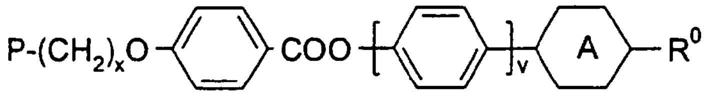

(R5)

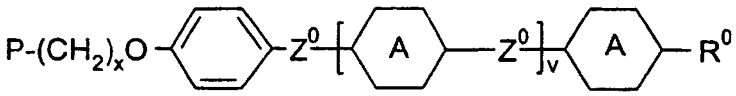

(R6)

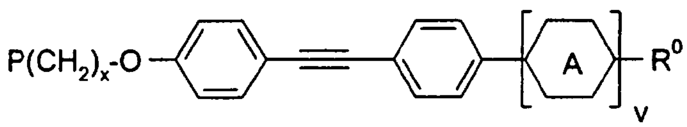

(R7)

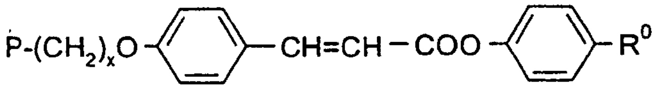

(R8)

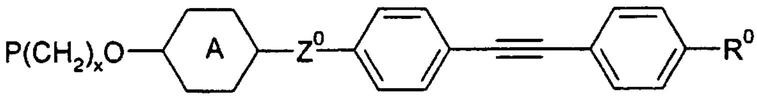

(R9)

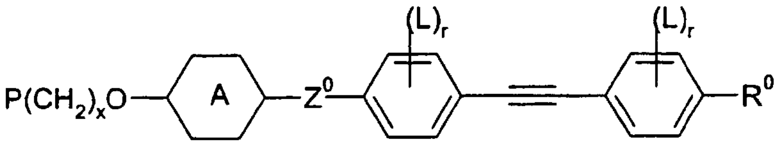

(R10)

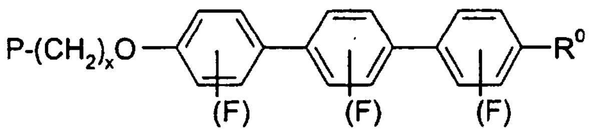

(R11)

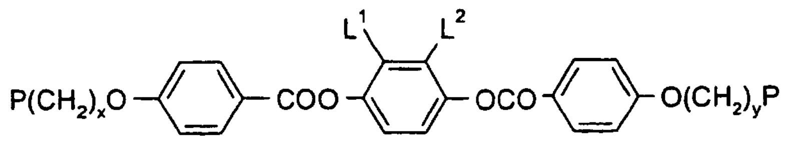

(R12)

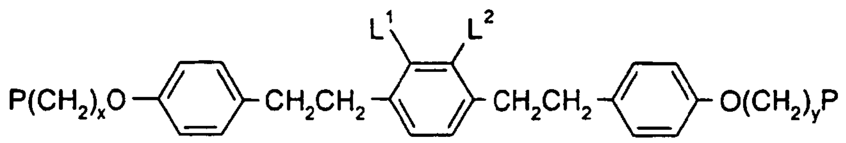

(R13)

In the above formulae, P is a polymerizable group, preferably an acryl, methacryl, vinyl, vinyloxy, propenyl ether, epoxy, oxetane or styryl group, x and y are identical or different integers from 1 to 12 , A is 1,4-phenylene that is optionally mono-, di- or trisubstituted by $L^1$, or 1,4-cyclohexylene, u and v are independently of each other 0 or 1, Z° and X° are independently of each other -O-, -S-, -COO-, -OCO-, -O-COO-, NR'-CO-NR'-, -O-CO-NR'-, NR'-COO-, $-CH_2CH_2-$, -CH=CH-, -C=C- or a single bond, R' is H or alkyl with 1 to 6 C-atoms, R° is a polar group or an unpolar group, L, $L^1$ and $L^2$ are independently of each other H, F, Cl, CN or an optionally halogenated alkyl, alkoxy, alkylcarbonyl, alkylcarbonyloxy, alkoxycarbonyl or alkoxycarbonyloxy group with 1 to 7 C atoms, and r is 0,1, 2, 3 or 4. The phenyl rings in the above formulae are optionally substituted by 1, 2, 3 or 4 groups L.

The term 'polar group' in this connection means a group selected from F, Cl, CN, $NO_2$, OH, $OCH_3$, OCN, SCN, an optionally fluorinated alkycarbonyl, alkoxycarbonyl, alkylcarbonyloxy or alkoxycarbonyloxy group with up to 4 C atoms or a mono- oligo- or polyfluorinated alkyl or alkoxy group with 1 to 4 C atoms. The term 'non-polar group' means an optionally halogenated alkyl, alkoxy, alkycarbonyl, alkoxycarbonyl, alkylcarbonyloxy or alkoxycarbonyloxy group with 1 or more, preferably 1 to 12 C atoms which is not covered by the above definition of 'polar group'.

The polymerizable formulation may also comprise up to 30%, preferably 0.5 to 20 % of one or more non-mesogenic compounds with one or more polymerizable functional group. Typical examples for monoreactive non-mesogenic compounds are alkylacrylates or alkylmethacrylates. Typical examples for direactive non-mesogenic monomers are alkyldiacrylates or alkyldimethacrylates with alkyl groups of 1 to 20 C atoms. Typical examples for multireactive non-mesogenic monomers are trimethylpropanetrimethacrylate or pentaerythritoltetraacrylate.

Suitable dichroic dyes are principally all dichroic dyes having an absorption maximum in the visible wavelength range, preferably between 450 and 800 nm. Such dyes are known in the art, like for example azo dyes or anthraquinone dyes. Examples of especially suitable and preferred dyes are the azo dyes F355 ®, F357 ® and F593 ® (from Nippon Kankoh Shikiso Kenkyusho Ltd., Okayama, Japan).

It is also possible to add one or more chain transfer agents to the polymerizable material in order to modify the physical properties of the polymer film. Especially preferred are thiol compounds, such as monofunctional thiol compounds like e.g. dodecane thiol or multifunctional thiol compounds like e.g. trimethylpropane tri(3-mercaptopropionate), very preferably mesogenic or liquid crystalline thiol compounds as for example disclosed in WO 96/12209, WO 96/25470 or US 6,420,001. When adding a chain transfer agent, the length of the free polymer chains and/or the length of the polymer chains between two crosslinks in the inventive polymer film can be controlled. When the amount of the chain transfer agent is increased, the polymer chain length in the obtained polymer film is decreasing.

As solvents for example standard organic solvents can be used. The solvents can be selected for example from ketones like e.g. acetone, methyl ethyl ketone, methyl propyl ketone or cyclohexanone, acetates like e.g. methyl, ethyl or butyl acetate or methyl acetoacetate, alcohols like e.g. methanol, ethanol or isopropyl alcohol, aromatic solvents like e.g. toluene or xylene, halogenated hydrocarbons like e.g. di- or trichloromethane, glycols or their esters like e.g. PGMEA (propyl glycol monomethyl ether acetate), γ-butyrolactone, and the like. It is also possible to use binary, ternary or higher mixtures of the above solvents.

For preparation of a polymer film, the polymerizable LC formulation is preferably coated or printed onto substrate, aligned into a uniform orientation and polymerized to permanently fix the structure. As a substrate for example a glass or quarz sheet or a plastic film or sheet can be used. It is also possible to put a second substrate on top of the coated mixture prior to and/or during and/or after polymerization. The substrates can be removed after polymerization or not. When using two substrates in case of curing by actinic radiation, at least one substrate has to be transmissive for the actinic radiation used for the polymerization. Isotropic or birefringent substrates can be used. In case the substrate is not removed from the polymerized film after polymerization, preferably isotropic substrates are used.

Preferably at least one substrate is a plastic substrate like for example a film of polyester such as polyethyleneterephthalate (PET) or polyethylenenaphthalate (PEN), of polyvinylalcohol (PVA), polycarbonate (PC) or triacetylcellulose (TAC), especially preferably a PET film or a TAC film. As a birefringent substrate for example an uniaxially stretched plastic film or a film comprising LC polymer material can be used. For example PET films are commercially available from DuPont Teijin Films under the trade name Melinex ®.

The polymerizable LC formulation can be applied onto the substate by conventional coating techniques like spin-coating or blade coating. It can also be applied to the substrate by conventional printing techniques which are known to the expert, like for example screen printing, offset printing, reel-to-reel printing, letter press printing, gravure printing, rotogravure printing, flexographic printing, intaglio printing, pad printing, heat-seal printing, ink-jet printing or printing by means of a stamp or printing plate.

The solvent is evaporated off before polymerization. In most cases it is suitable to heat the mixture in order to facilitate the evaporation of the solvent.

After evaporation of the solvent the polymerizable LC material does spontaneously adopt planar orientation, i.e. with the LC director parallel to the film plane.

Additionally, the development of planar alignment can be supported for example by shearing the material e.g. with a doctors blade, by applying an alignment layer onto the substrate, for example a layer of rubbed polyimide or sputtered $SiO_x$, by rubbing the substrate or by adding one or more surfactants to the polymerizable mesogenic material. Suitable surfactants are described in the literature, for example in J. Cognard, Mol.Cryst.Liq.Cryst. 78, Supplement 1, 1-77 (1981).

The polymerizable LC material can additionally comprise one or more other suitable components such as, for example, catalysts, sensitizers, stabilizers, chain-transfer agents, inhibitors, accelerators, co-reacting monomers, surface-active compounds, lubricating agents, wetting agents, dispersing agents, hydrophobing agents, adhesive agents, flow improvers, defoaming agents, deaerators, diluents, reactive diluents, auxiliaries, colourants, dyes or pigments.

Polymerization of the LC material is preferably achieved by exposing it to heat or actinic radiation. Actinic radiation means irradiation with light, like UV light, IR light or visible light, irradiation with X-rays or gamma rays or irradiation with high energy particles, such as ions or electrons. Preferably polymerization is carried out by photoirradiation, in particular with UV light, very preferably with linear polarized UV light. As a source for actinic radiation for example a single UV lamp or a set of UV lamps can be used. When using a high lamp power the curing time can be reduced. Another possible source for photoradiation is a laser, like e.g. a UV laser, an IR laser or a visible laser.

Polymerization is preferably carried out in the presence of an initiator absorbing at the wavelength of the actinic radiation. For example, when polymerizing by means of UV light, a photoinitiator can be used that decomposes under UV irradiation to produce free radicals or ions that start the polymerization reaction. UV photoinitiators are preferred, in particular radicalic UV photoinitiators. As standard photoinitiator for radical polymerization for example the commercially available Irgacure® 651, Irgacure® 184, Darocure® 1173 or Darocure® 4205 (all from Ciba Geigy AG) can be used, whereas in case of cationic photopolymerization the commercially available UVI 6974 (Union Carbide) can be used.

The curing time is dependent, inter alia, on the reactivity of the polymerizable material, the thickness of the coated layer, the type of polymerization initiator and the power of the UV lamp. The curing time according to the invention is preferably not longer than 10 minutes, particularly preferably not longer than 5 minutes and very particularly preferably shorter than 2 minutes. For mass production short curing times of 3 minutes or less, very preferably of 1 minute or less, in particular of 30 seconds or less, are preferred.

Preferably polymerization is carried out under an atmosphere of inert gas like for example a nitrogen atmosphere.

The polymer film obtained by the inventive process can be used as polarizer or polarization filter in optical devices like liquid crystal displays, and in decorative and security applications, especially in security markings that are applied to items or documents of value for easy identification or prevention of falsification, in nonlinear optics, optical recording or information storage.

The polymer film produced by the process according to the present invention is especially useful as security device for the authentification, identification, verification or prevention of copying or counterfeiting of high value documents that include security markings utilising nematic liquid crystal devices. The polymer film can be used as a separate viewer to inspect the document or may be incorporated into a transparent section of the document. In the latter example the polymer film could then be positioned over the security device to allow verification. Such documents include for example ID cards, passports, bank notes, credit cards, or any product with money value like stamps, tickets, shares, cheques etc.. The film can be either included in a laminate or adhesively bound to the surface of the document.

The polymer film can be used for direct application e.g. onto an article, device or document, or as thread, hologram, transfer foil or hot stamping foil in decorative or security applications as mentioned above or for the identification of hidden images, informations or patterns. It can be applied to consumer products or household objects, car bodies, foils, packing materials, clothes or woven fabric, incorporated into plastic, or applied as security marking or thread on documents of value.

The examples below serve to illustrate the invention without limiting it. In the foregoing and the following, all temperatures are given in degrees Celsius, and all percentages are by weight, unless stated otherwise.

Example 1

The following polymerizable mixture is prepared

| | |
|---|---|
| Compound (1) | 12.05 % |
| Compound (2) | 12.05 % |
| Compound (3) | 19.33 % |
| Compound (4) | 4.75 % |
| Fluorad FC171® | 0.24 % |
| Irgacure 651® | 0.51 % |
| Irganox 1076® | 0.04 % |
| F355® | 0.19 % |
| F357® | 0.36 % |
| F593® | 0.48 % |
| Toluene | 50.00 % |

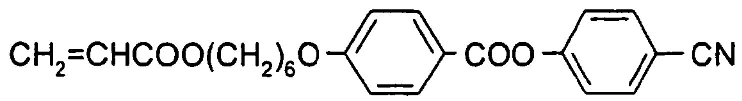

(1)

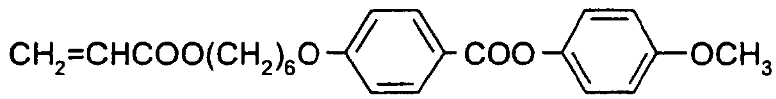

(2)

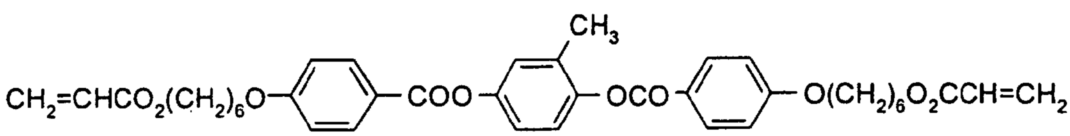

(3)

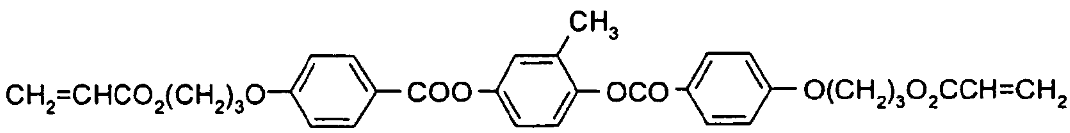

(4)

Fluorad FC171 is a surfactant (from 3M). Irgacure 651 ® and Irganox 1076 ® are UV initiators (from Ciba AG). F355, F357 and F593 are azo dyes (from Nippon Kankoh Shikiso Kenkyusho Ltd., Okayama, Japan).

The solution is coated onto an untreated TAC film using a white K-Bar to leave a 4 μm thick wet layer. The coating is placed on a hotplate to remove residual solvent and then exposed to UV light (100 $mW/cm^2$) for 2 seconds under a nitrogen atmosphere to give a polymer film with a thickness of 2 μm which can be used as linear polarizer.

Figure 1 shows light transmission between two polarizer films with parallel (a) and crossed (b) transmission axes and the polarizing efficiency (c) of the polarizer .

A security device is prepared by applying a nematic liquid crystal polymer film onto a cholesteric liquid crystal polymer film reflecting predominantly red light. This device is then viewed through a polarizer film prepared as described above, by placing the polarizer film close to and parallel to the security device. Upon rotating the polarizer the security device becomes darker at certain orientations of the polarizer.

<u>Example 2</u>

The following polymerizable mixture is prepared

| | |
|---|---|
| Compound (1) | 12.10 % |
| Compound (2) | 12.10 % |
| Compound (3) | 19.40 % |
| Compound (4) | 4.80 % |
| Fluorad FC171® | 0.30 % |
| Irgacure 651® | 0.50 % |
| Irganox 1076® | 0.04 % |
| F355® | 0.76 % |
| Toluene | 50.00 % |

This mixture is coated onto clear TAC film and a polarizer prepared as described in example 1. The polarizing film produced has a red colour.

**Figure 2** shows light transmission between two polarizer films with parallel (a) and crossed (b) transmission axes and the polarizing efficiency (c) of the polarizer.

A security device is prepared by applying a nematic liquid crystal polymer film onto a cholesteric liquid crystal polymer film reflecting predominantly green light. This device is then viewed through a polarizer film prepared as described above, by placing the polarizer film close to and parallel to the security device. Upon rotating the polarizer the security device becomes darker at certain orientations of the polarizer.

Similar effects are seen if the cholesteric material reflects predominantly red light but the contrast is greater when a green cholesteric film is used.

## Claims

**1.** Process for the preparation of a linear polarizer comprising the steps of

A) providing a layer of a polymerizable mesogenic formulation comprising one or more polymerizable mesogenic compounds with a nematic and/or smectic LC phase having at least one polymerizable group,
one or more dichroic dyes having an absorption maximum in the visible wavelength range,
optionally one or more chain transfer agents,
optionally one or more polymerization initiators and
optionally one or more solvents on a substrate,
B) evaporating off the solvent, whereby after evaporation of the solvent the polymerizable LC material spontaneously adopts planar orientation,
C) polymerizing the mesogenic material, and
D) optionally removing the substrate.

**2.** Process for the preparation of a polarizer according to claim 1, whereby the polymerizable mesogenic formulation comprises

2 to 60 % of one or more mesogenic compounds having two or more polymerizable groups,
0 to 60 % of one or more mesogenic compounds having one polymerizable group,

0.1 to 10 % of one or more dichroic dyes,
0 to 5 % of one or more chain transfer agents,
0 to 10 % of one or more polymerization initiators,
0 to 90 % of one or more solvents.

**3.** Process for the preparation of a polarizer according to claims 1 or 2, whereby the polymerizable mesogenic formulation comprises

3 to 40 % of one or more mesogenic compounds having two or more polymerizable groups,
3 to 40 % of one or more mesogenic compounds having one polymerizable group,
0.2 to 5 % of one or more dichroic dyes,
0.1 to 3 % of one or more chain transfer agents,
0.1 to 8 % of one or more photoinitiators,
35 to 80 % of one or more organic solvents.

**4.** Linear polarizer, obtained by a process according to any of claims 1 to 3.

**5.** Polarizer, comprising a linear polarizer according to claim 4 and additionally one or more birefringent films.

**6.** Polarizer according to claim 5, which is a circular polarizer and comprises additionally one birefringent film.

**7.** Polarizer according to claim 4, **characterized in that** its polarizing efficiency PE is < 50 % for light of a wavelength from 700 to 400nm, wherein

$$PE = \sqrt{\frac{(T_p - T_c)}{(T_p + T_c)}}\ X\ 100\%$$

and $T_p$ is the transmission of light between two parallel polarizers, and $T_c$ is the transmission of light between two crossed polarizers.

**8.** Use of a polarizer according to any of claims 4 to 7 in optical components for optical or electrooptical devices, for decorative or security applications.

**9.** Use according to claim 8, whereby the polarizer has absorption in the visible range, for viewing or making visible a security feature or security marking.

**10.** Means for detection, inspection or verification of a security marking or security feature comprising one or more polarizers according to at least one of claims 4 to 7.

**11.** Security marking, feature or device comprising one or more polarizers according to at least one of claims 4 to 7.

**12.** Security marking, feature or device according to claim 11, further comprising a nematic LC layer on top of a cholesteric LC layer.

**13.** Document of value, transfer foil or hot stamping foil comprising one or more security markings, features or devices according to claims 11 or 12.

**14.** Document of value according to claim 13, wherein the polarizer is incorporated into a transparent section of the document.

**Patentansprüche**

**1.** Verfahren zur Herstellung eines Linearpolarisators, umfassend die Schritte

A) Bereitstellen einer Schicht einer polymerisierbaren mesogenen Formulierung enthaltend eine oder mehrere

polymerisierbare mesogene Verbindungen mit einer nematischen und/ oder smektischen LC-Phase mit mindestens einer polymerisierbaren Gruppe,
einen oder mehrere dichroitische Farbstoffe mit einem Absorptionsmaximum im sichtbaren Wellenlängenbereich,
gegebenenfalls einen oder mehrere Kettenübertragungsreagenzien, gegebenenfalls einen oder mehrere Polymerisationsinitiatoren und gegebenenfalls ein oder mehrere Lösungsmittel auf einem Substrat,
B) Abdampfen des Lösungsmittels, wobei das polymerisierbare LC-Material nach dem Abdampfen des Lösungsmittels spontan eine planare Ausrichtung annimmt,
C) Polymerisieren des mesogenen Materials und
D) gegebenenfalls Entfernen des Substrats.

**2.** Verfahren zur Herstellung eines Polarisators nach Anspruch 1, wobei die polymerisierbare mesogene Formulierung

2 bis 60 % einer oder mehrerer mesogener Verbindungen mit zwei oder mehr polymerisierbaren Gruppen,
0 bis 60 % einer oder mehrerer mesogener Verbindungen mit einer polymerisierbaren Gruppe,
0,1 bis 10 % eines oder mehrerer dichroitischer Farbstoffe,
0 bis 5 % eines oder mehrerer Kettenübertragungsreagenzien,
0 bis 10 % eines oder mehrerer Polymerisationsinitiatoren,
0 bis 90 % eines oder mehrerer Lösungsmittel

enthält.

**3.** Verfahren zur Herstellung eines Polarisators nach Anspruch 1 oder 2, wobei die polymerisierbare mesogene Formulierung

3 bis 40 % einer oder mehrerer mesogener Verbindungen mit zwei oder mehr polymerisierbaren Gruppen,
3 bis 40 % einer oder mehrerer mesogener Verbindungen mit einer polymerisierbaren Gruppe,
0,2 bis 5 % eines oder mehrerer dichroitischer Farbstoffe,
0,1 bis 3 % eines oder mehrerer Kettenübertragungsreagenzien,
0,1 bis 8 % eines oder mehrerer Photoinitiatoren,
35 bis 80 % eines oder mehrerer organischer Lösungsmittel

enthält.

**4.** Linearpolarisator erhalten nach einem Verfahren nach einem beliebigen der Ansprüche 1 bis 3.

**5.** Polarisator enthaltend einen Linearpolarisator nach Anspruch 4 und zusätzlich eine oder mehrere doppelbrechende Folien.

**6.** Polarisator nach Anspruch 5, bei dem es sich um einen Zirkularpolarisator handelt und der zusätzlich eine doppelbrechende Folie enthält.

**7.** Polarisator nach Anspruch 4, **dadurch gekennzeichnet, dass** sein Polarisationswirkungsgrad PE für Licht einer Wellenlänge von 700 bis 400nm < 50 % beträgt, wobei

$$\text{PE} = \sqrt{\frac{(T_p - T_c)}{(T_p + T_c)}}\ X\ 100\%$$

und $T_p$ die Transmission des Lichtes zwischen zwei parallelen Polarisatoren und $T_c$ die Transmission des Lichtes zwischen zwei gekreuzten Polarisatoren ist.

**8.** Verwendung eines Polarisators nach einem beliebigen der Ansprüche 4 bis 7 in optischen Komponenten für optische oder elektrooptische Vorrichtungen, für dekorative oder Sicherheitsanwendungen.

**9.** Verwendung nach Anspruch 8, wobei der Polarisator Absorption im sichtbaren Bereich aufweist, zum Betrachten

oder Sichtbarmachen eines Sicherheitsmerkmals oder einer Sicherheitsmarkierung.

**10.** Mittel zum Nachweisen, Prüfen oder Verifizieren einer Sicherheitsmarkierung oder eines Sicherheitsmerkmals enthaltend einen oder mehrere Polarisatoren nach mindestens einem der Ansprüche 4 bis 7.

**11.** Sicherheitsmarkierung, -merkmal oder -vorrichtung enthaltend einen oder mehrere Polarisatoren nach mindestens einem der Ansprüche 4 bis 7.

**12.** Sicherheitsmarkierung, -merkmal oder -vorrichtung nach Anspruch 11, weiterhin enthaltend eine nematische LC-Schicht auf einer cholesterischen LC-Schicht.

**13.** Wertdokument, Transferfolie oder Heißprägefolie enthaltend eine oder mehrere Sicherheitsmarkierungen, -merkmale oder -vorrichtungen nach Ansprüchen 11 oder 12.

**14.** Wertdokument nach Anspruch 13, wobei der Polarisator in einen durchsichtigen Bereich des Dokumentes eingearbeitet ist.

## Revendications

**1.** Procédé pour la préparation d'un polariseur linéaire, comprenant les étapes de :

A) fourniture d'une couche en une formulation mésogène polymérisable comprenant un ou plusieurs composés mésogènes polymérisables présentant une phase LC nématique et/ou smectique comportant au moins un groupe polymérisable,
d'un ou de plusieurs colorants dichroïques présentant un maximum d'absorption dans la plage des longueurs d'onde visibles,
en option, d'un ou de plusieurs agents de transfert de chaîne,
en option, d'un ou de plusieurs initiateurs de polymérisation, et
en option, d'un ou de plusieurs solvants sur un substrat,
B) évaporation du solvant et ainsi, après l'évaporation du solvant, le matériau LC polymérisable adopte spontanément une orientation plane,
C) polymérisation du matériau mésogène, et
D) en option, enlèvement du substrat.

**2.** Procédé pour la préparation d'un polariseur selon la revendication 1, dans lequel la formulation mésogène polymérisable comprend :

de 2 à 60% d'un ou de plusieurs composés mésogènes comportant deux groupes polymérisables ou plus,
de 0 à 60% d'un ou de plusieurs composés mésogènes comportant un groupe polymérisable,
de 0,1 à 10% d'un ou de plusieurs colorants dichroïques,
de 0 à 5% d'un ou de plusieurs agents de transfert de chaîne,
de 0 à 10% d'un ou de plusieurs initiateurs de polymérisation,
de 0 à 90% d'un ou de plusieurs solvants.

**3.** Procédé pour la préparation d'un polariseur selon les revendications 1 ou 2, dans lequel la formulation mésogène polymérisable comprend :

de 3 à 40% d'un ou de plusieurs composés mésogènes comportant deux groupes polymérisables ou plus,
de 3 à 40% d'un ou de plusieurs composés mésogènes comportant un groupe polymérisable,
de 0,2 à 5% d'un ou de plusieurs colorants dichroïques,
de 0,1 à 3% d'un ou de plusieurs agents de transfert de chaîne,
de 0,1 à 8% d'un ou de plusieurs photo-initiateurs,
de 35 à 80% d'un ou de plusieurs solvants.

**4.** Polariseur linéaire, obtenu au moyen d'un procédé selon l'une quelconque des revendications 1 à 3.

**5.** Polariseur, comprenant un polariseur linéaire selon la revendication 4 et de façon additionnelle, un ou plusieurs

films biréfringents.

**6.** Polariseur selon la revendication 5, lequel est un polariseur circulaire et comprend de façon additionnelle un film biréfringent.

**7.** Polariseur selon la revendication 4, **caractérisé en ce que** son rendement de polarisation PE est < 50% pour la lumière d'une longueur d'onde de 700 à 400 nm, dans lequel :

$$PE = \sqrt{\frac{(T_p - T_c)}{(T_p + T_c)}}\ X\ 100\%$$

et $T_p$ est la transmission de lumière entre deux polariseurs parallèles et $T_c$ est la transmission de lumière entre deux polariseurs croisés.

**8.** Utilisation d'un polariseur selon l'une quelconque des revendications 4 à 7 dans des composants optiques pour des dispositifs optiques ou électro-optiques, pour des applications de décoration ou de sécurité.

**9.** Utilisation selon la revendication 8, dans laquelle le polariseur présente une absorption dans la plage visible, pour voir ou rendre visible une caractéristique de sécurité ou un marquage de sécurité.

**10.** Moyen pour la détection, l'inspection ou la vérification d'un marquage de sécurité ou d'une caractéristique de sécurité comprenant un ou plusieurs polariseurs selon au moins l'une des revendications 4 à 7.

**11.** Marquage de sécurité, caractéristique ou dispositif comprenant un ou plusieurs polariseurs selon au moyen l'une des revendications 4 à 7.

**12.** Marquage de sécurité, caractéristique ou dispositif selon la revendication 11, comprenant en outre une couche LC nématique sur le sommet d'une couche LC cholestérique.

**13.** Document de valeur, feuille de transfert ou feuille de matriçage à chaud comprenant un ou plusieurs marquages de sécurité, caractéristiques ou dispositifs selon les revendications 11 ou 12.

**14.** Document de valeur selon la revendication 13, dans lequel le polariseur est incorporé dans une section transparente du document.

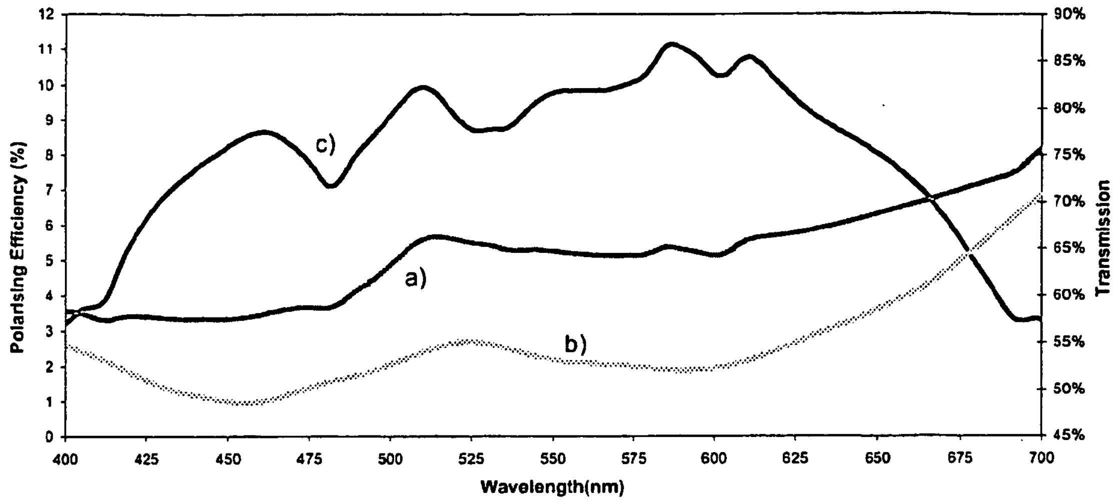


Figure 1

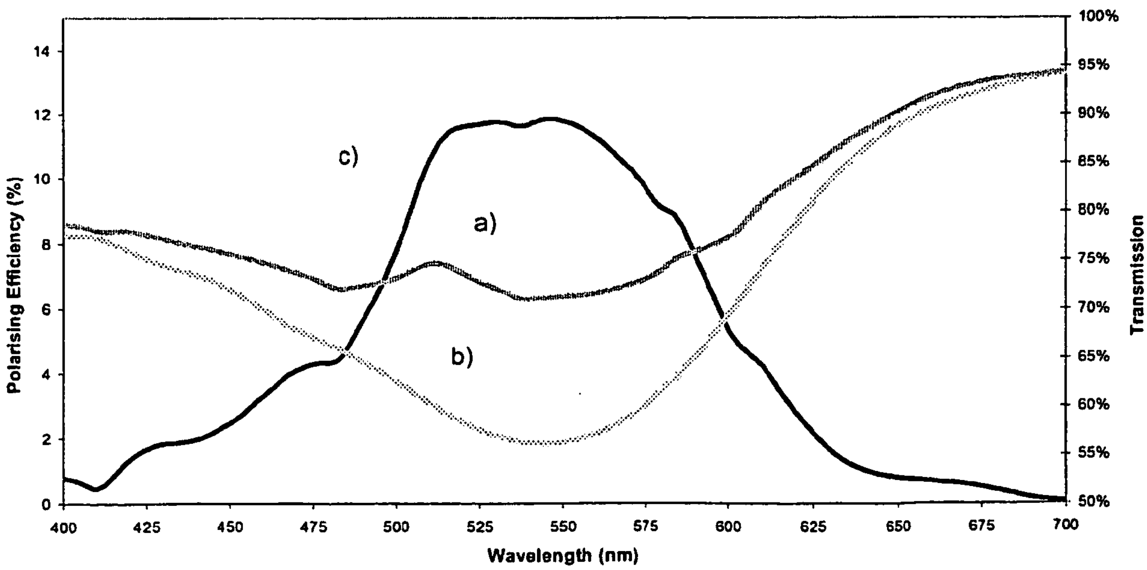


Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1226459 A
- US 5707566 A
- US 5672296 A
- EP 0397263 A
- US 6007745 A
- GB 2357291 A
- EP 1256602 A1
- US 6686980 B1
- EP 1462485 A1
- GB 2357061 A
- US 6641874 B
- EP 1335217 A
- EP 1336874 A
- WO 2004005425 A1
- WO 2004025337 A1
- EP 1422283 A
- EP 1431050 A
- US 6117920 A
- US 6217948 B
- US 6660345 B
- GB 2355720 A
- US 6667793 B
- EP 1201726 A
- EP 1381910 A
- EP 1381520 A
- EP 1281538 A
- EP 1295929 A
- WO 9322397 A
- EP 0261712 A
- DE 19504224
- WO 9522586 A
- WO 9700600 A
- GB 2351734 A
- WO 9612209 A
- WO 9625470 A
- US 6420001 B


### Non-patent literature cited in the description


- **J. COGNARD.** *Mol.Cryst.Liq.Cryst.,* 1981, vol. 78 (1), 1-77